(19) Europäisches Patentamt
European Patent Office
Office européen des brevets

(11) EP 3 114 723 B1

(12) FASCICULE DE BREVET EUROPEEN

(45) Date de publication et mention
de la délivrance du brevet:
31.10.2018 Bulletin 2018/44

(51) Int Cl.:
H01M 8/04 (2016.01)     H01M 8/12 (2016.01)

(21) Numéro de dépôt: 15714853.7

(22) Date de dépôt: 25.02.2015

(86) Numéro de dépôt international:
PCT/FR2015/050449

(87) Numéro de publication internationale:
WO 2015/132504 (11.09.2015 Gazette 2015/36)

(54) **PROCEDE DE DETECTION DE L'OXYDATION D'UNE ANODE METALLIQUE D'UN DISPOSITIF ELECTROCHIMIQUE**

VERFAHREN ZUR DETEKTION DES OXIDATIONSGRADES EINER METALLANODE IN EINER ELEKTROCHEMISCHEN VORRICHTUNG

METHOD FOR THE DETECTION OF THE OXIDATION STATE OF A METAL ANODE IN AN ELECTROCHEMICAL DEVICE

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité: 03.03.2014 FR 1451708

(43) Date de publication de la demande:
11.01.2017 Bulletin 2017/02

(73) Titulaire: Commissariat à l'Énergie Atomique
et aux Énergies Alternatives
75015 Paris (FR)

(72) Inventeur: MOREL, Bertrand
F-38950 Saint Martin Le Vinoux (FR)

(74) Mandataire: Cabinet Laurent & Charras
Le Contemporain
50 Chemin de la Bruyère
69574 Dardilly Cedex (FR)

(56) Documents cités:
FR-A1- 2 983 493     US-A1- 2006 222 929

**Description**

## DOMAINE DE L'INVENTION

L'invention concerne les dispositifs électrochimiques, tels que les piles à combustible et les électrolyseurs, ayant une anode comprenant du métal. L'invention concerne plus particulièrement la détection de la prédisposition de l'anode d'un dispositif électrochimique à s'oxyder lors de son fonctionnement, notamment la prédisposition d'un cermet métallique à l'oxydation.

## ETAT DE LA TECHNIQUE

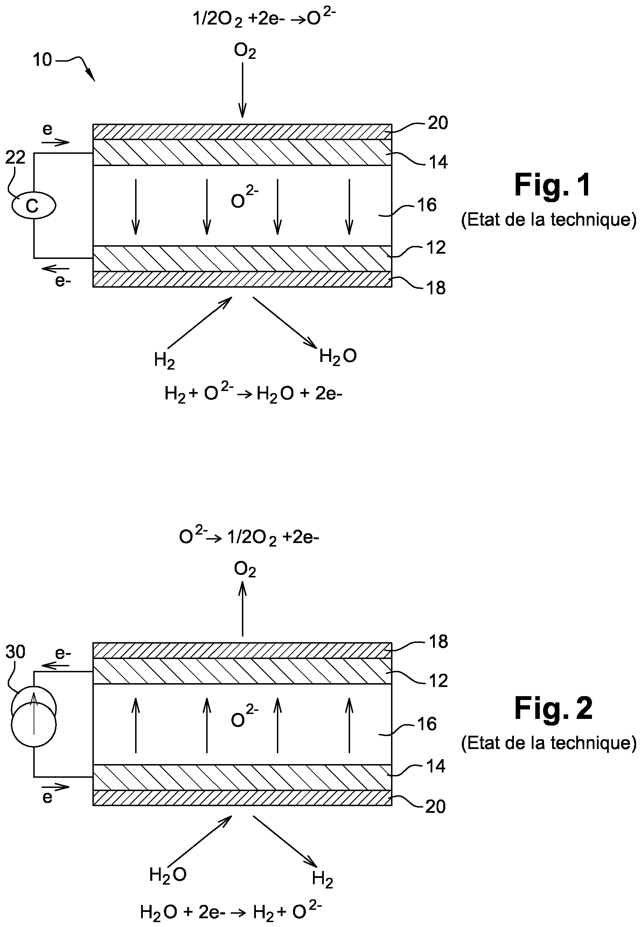

Comme cela est connu en soi, une pile à combustible du type à oxyde solide comprend une cellule, ou plusieurs cellules agencées en série, telle qu'illustrée à la figure 1. Une cellule à oxyde solide **10,** ou « SOFC » (acronyme anglo-saxon « *Solid Oxide Fuel Cell* ») comprend notamment :

- une première électrode conductrice poreuse **12,** ou « anode », destinée à être alimentée en combustible, par exemple de l'hydrogène ($H_2$),
- une seconde électrode conductrice poreuse **14,** ou « cathode », destinée à être alimentée en comburant, par exemple du dioxygène ($O_2$), et
- une membrane à oxyde solide **16** prise en sandwich entre l'anode **12** et la cathode **14.**

La cellule **10,** notamment lorsqu'elle est empilée avec d'autres cellules du même type, comporte par ailleurs, accolés à l'anode **12** et à la cathode **14,** des inter-connecteurs **18, 20** permettant la distribution du combustible et du comburant entre les cellules. Par exemple :

- l'anode **12** est constituée d'un cermet métallique, à savoir une céramique telle que de la zircone stabilisée (Ni-YSZ) ou de la cérine gadolinée (Ni-CGO), dans laquelle est dispersée du métal, notamment du nickel,
- la cathode **14** est constituée d'un matériau céramique conducteur ; et
- la membrane **16** est constituée d'oxyde de zirconium $ZrO_2$ stabilisé par 3 à 8% molaire d'ytrrium ($Y_2O_3$) ou de cérine gadolinée.

Comme cela est connu, la membrane **16** est conductrice anionique uniquement pour de hautes températures, usuellement des températures supérieures à 600°C.

En fonctionnement, l'anode **12** et la cathode **14** de la cellule **10** sont connectées à une charge électrique, par exemple un circuit **22,** permettant le passage des électrons entre l'anode **12** et la cathode **14,** l'anode **12** et la cathode **14** sont respectivement alimentées en hydrogène ou autres combustibles, tels que du $CH_4$, du CO, etc, et en oxygène, et la cellule est portée à une température comprise entre 600 °C et 1000 °C, afin d'activer la conduction anionique de la membrane **16.** Une réaction d'oxydation a alors lieu sur l'anode **12,** à savoir la réaction $H_2 + O^{2-} \rightarrow H_2O + 2e^-$. Les électrons empruntent alors le circuit **22** pour rejoindre la cathode. En retour, une réaction de réduction a alors lieu sur la cathode **14,** à savoir la réaction $\frac{1}{2}O_2 + 2e^- \rightarrow O^{2-}$ et les anions $O^{2-}$ produits traversent la membrane **16** pour rejoindre l'anode **14.** La différence de pression partielle d'oxygène entre l'anode et la cathode fait ainsi apparaître une différence de potentiel entre l'anode et la cathode. A un courant électrique donné, proportionnel au flux d'ions $O^{2-}$ traversant l'électrolyte, est associé une tension aux bornes de la pile et le couple (U,i) caractérise les performances de cette pile.

Dans l'idéal, l'anode **12** est isolée du dioxygène, notamment par des joints et/ou par des mesures de protection à base de gaz protecteur. Dans la réalité, on observe au contraire que l'anode **12** peut être mise en présence d'oxygène en raison par exemple d'une pression partielle d'oxygène trop importante due à un appauvrissement trop important en $H_2$, en cas de problème d'étanchéité, ou en raison d'une absence de gaz protecteur lors des phases de démarrage et d'arrêt de la pile. De plus en cas de défaut accidentel d'alimentation en hydrogène de l'anode ou d'un taux de conversion de l'hydrogène supérieur à 100%, on observe qu'il peut exister un excès local d'anions $O^{2-}$ qui oxydent le métal de l'anode. Il est ainsi fréquent d'observer une oxydation de l'anode. Par exemple, dans le cas d'un cermet de nickel, on observe une oxydation du nickel selon la réaction $Ni + \frac{1}{2}O_2 \rightarrow NiO$ et/ou selon la réaction $Ni + O^{2-} \rightarrow NiO + 2e^-$.

Or, le volume molaire d'un oxyde métallique est généralement très supérieur au volume du métal. Ainsi, l'oxydation du nickel entraine une expansion volumique de 66%, ce qui place l'anode en compression contre les éléments avec lesquels elle est en contact et implique une traction de la membrane anionique **16** qui peut alors fissurer celle-ci et provoquer des fuites entre l'anode **12** et la cathode **14.**

En outre, l'oxydation du métal est généralement réversible. Par exemple, en présence d'hydrogène, l'oxyde de nickel peut à nouveau être réduit selon la réaction $NiO + H2 \rightarrow Ni + H2O$, et donc l'anode peut subir une réduction de son volume. Une fois réduit, le nickel peut donc à nouveau être oxydé.

Il peut ainsi apparaître des cycles d'expansion et de réduction volumique qui, à force de répétition, fragilisent fortement la cellule. En effet, ces cycles d'oxydoréduction génèrent des sollicitations sur les différentes couches constitutives de la cellule. En particulier, la membrane électrolytique **16,** d'une épaisseur de quelques micromètres, subit des cycles de traction/compression qui finissent par l'endommager. Des fissurations et une perte d'étanchéité finissent ainsi par apparaître. Au final, les performances de la cellule, et plus généralement d'une pile comprenant la cellule, sont réduites.

Les phénomènes venant d'être décrits s'observent également dans les électrolyseurs à oxyde solide. Comme illustré à la figure 2, un tel électrolyseur présente une structure identique à celle d'une cellule à oxyde solide, seul son fonctionnement est différent. En effet, dans un électrolyseur, la cathode **14** est alimentée en eau ($H_2O$) et un courant électrique *I* est imposé entre l'anode **12** et la cathode **14** de manière à induire la réduction de l'eau sur la cathode **14,** ce qui produit de l'hydrogène au niveau de la cathode **14** et de l'oxygène au niveau de l'anode **12.** Or, la détection de l'oxydation de l'anode d'une cellule de pile à combustible ou d'un électrolyseur, et de manière générale de l'anode d'un dispositif électrochimique, intervient généralement une fois celle-ci définitivement endommagée, notamment lorsqu'un opérateur s'aperçoit que la cellule a des performances insuffisantes. A ce stade, la seule solution est le remplacement de la pile ou de l'électrolyseur dans son entier. Toutefois, une détection précoce des phénomènes d'oxydation permettrait commander la cellule de manière à réduire le taux de conversion de l'hydrogène, par exemple en diminuant le courant débité ou en augmentant le débit de combustible, afin de ne pas définitivement endommager la cellule.

L'art antérieur représenté par US 2006/222929 et FR 2983493 divulgue des procédés qui ont pour but de traiter des anodes métalliques oxydées pour les régénérer.

**EXPOSE DE L'INVENTION**

Le but de la présente invention est de proposer un procédé de détection d'un phénomène d'oxydation d'une anode métallique poreuse d'un dispositif électrochimique.

A cet effet, l'invention a pour objet un procédé de détection d'un phénomène d'oxydation d'une anode métallique poreuse d'un dispositif électrochimique, ledit dispositif comportant une cathode poreuse, et un électrolyte intercalé entre l'anode et la cathode.

Ledit procédé comprend l'application d'un mode de fonctionnement prédéterminé au dispositif électrochimique consistant à alimenter l'anode avec un combustible réducteur, à alimenter la cathode avec un comburant oxydant, et à activer un mode de conduction anionique de l'électrolyte.

Le procédé selon l'invention est défini dans la revendication 1 et consiste en outre, lors de l'application du mode de fonctionnement du dispositif électrochimique :

- à appliquer une première valeur de courant entre l'anode et la cathode de manière à obtenir une tension constante entre l'anode et la cathode ;
- puis à faire varier le courant appliqué entre l'anode et la cathode entre la première valeur de courant et une deuxième valeur de courant de manière à induire un premier régime transitoire de la tension entre l'anode et la cathode ;

- à appliquer une troisième valeur de courant entre l'anode et la cathode de manière à obtenir une tension constante entre l'anode et la cathode, la troisième valeur de courant étant différente de la première valeur de courant; la troisième valeur de courant étant proche de la valeur d'un courant limite induisant la consommation complète du combustible alimentant l'anode d'un dispositif idéal, les première et troisième valeurs de courant présentant une différence d'au moins 5%;
- puis à faire varier le courant appliqué entre l'anode et la cathode entre la troisième valeur de courant et une quatrième valeur de courant de manière à induire un second régime transitoire de la tension entre l'anode et la cathode ;
- à comparer les premier et second régimes transitoires et à détecter l'occurrence d'un phénomène d'oxydation de l'anode si les premier et second régimes transitoires diffèrent l'un de l'autre de plus d'une valeur prédéterminée

En d'autres termes, il a été constaté que l'état oxydé de l'anode influe de manière quantifiable et mesurable sur la réponse de la tension entre l'anode et la cathode à une perturbation en courant.

L'invention consiste donc à imposer un état oxydé à l'anode, à provoquer une perturbation de cet état oxydé par l'application d'un courant, puis à caractériser le régime transitoire de la tension qui en résulte.

La caractérisation du régime transitoire résultant de la perturbation de l'état oxydé, consiste à comparer ce régime transitoire à un autre régime transitoire résultant de la perturbation d'un état dans lequel l'anode présente un taux d'oxydation différent, par exemple inférieur ou nul. Ce second état est obtenu en imposant un second courant, différent du premier, notamment un courant inférieur ou nul pour obtenir un taux d'oxydation inférieur ou nul de l'anode.

L'invention permet donc de définir deux états d'oxydation différents de l'anode et permet de caractériser la différence entre les régimes transitoires qui résultent de la perturbation de ces états. La caractérisation de cette différence peut être réalisée de multiples manières, par exemple en comparant les durées d'établissement de la tension sur leurs régimes statiques respectifs, en comparant les taux d'amortissement des régimes transitoires, voire même en choisissant des perturbations de courant ayant un spectre fréquentiel important et en comparant les spectres fréquentiels des tensions résultantes desdites perturbations.

Par ailleurs, un régime transitoire peut être mesuré et caractérisé a priori et les caractéristiques distinctives de ce régime, servant de base à la comparaison, peuvent être mémorisées dans une mémoire informatique et être utilisées lors de la mise en oeuvre effective de la détection. Notamment, la comparaison consiste à déterminer la valeur d'une caractéristique transitoire prédéterminée, par exemple une durée d'établissement, pour chacun des premier et second régimes transitoires, et à comparer les valeurs déterminées pour lesdits régimes.

Enfin, la détection des phénomènes d'oxydation se fait simplement sur le dispositif en mesurant une tension entre l'anode et la cathode et en connectant ces dernières, par exemple à une source de courant pilotable. Le procédé ne nécessite donc ni démontage ni modification structurelle du dispositif pour pouvoir être mis en oeuvre. Selon un mode de réalisation de l'invention :

- ■ l'application des première et troisième valeurs de courant consiste à connecter une charge électrique entre l'anode et la cathode ; et
- ■ pour l'application de la troisième valeur de courant, ladite charge électrique demandant un débit de courant par le dispositif compris entre 95% et 100% de la valeur d'un courant limite induisant la consommation complète du combustible alimentant l'anode d'un dispositif idéal.

Le courant limite correspond au courant maximal qu'il est possible de tirer du dispositif électrochimique si ce dernier fonctionnait de manière idéale et correspond donc à la consommation complète du combustible sur une partie de l'anode. La valeur du courant limite, comme cela est connu en soi, est déterminé selon la relation $i_{limite} = \frac{Q_{H_2}}{2F}$, où $Q_{H_2}$ est le débit de combustible sur l'anode exprimé en mol.s$^{-1}$, et F = 9,65.10$^4$ C.mol$^{-1}$ est la constante de Faraday. Dans les faits, en raison des défauts que présente le dispositif, le courant maximal qui peut débiter ce dernier, correspondant à la consommation complète du combustible sur une partie de l'électrode, est inférieur au courant limite théorique et n'est pas connu à l'avance. Dans ce qui suit, on parlera de « courant limite » et de « courant maximal » pour distinguer ces deux notions.

En d'autres termes, la charge électrique est choisie pour faire débiter le courant limite le troisième courant, ce qui permet de garantir que le courant réel débité par le dispositif sera égal au courant maximal que peut débiter le dispositif. L'oxydation de l'anode est ainsi non seulement rapide mais également l'oxydation maximale que l'anode peut subir. On obtient donc un régime transitoire dont la déviance est maximale par rapport au régime transitoire associé à la première valeur de courant, ce qui facilite donc la détection des phénomènes d'oxydation. Par ailleurs, on choisissant la valeur du premier courant de sorte qu'il n'y a pas de phénomène d'oxydation, s'il n'existe pas de différence entre les deux régimes transitoires, on peut conclure qu'il n'existe pas de phénomène d'oxydation de l'anode.

En variante, le débit de courant est compris entre 80% et 100%. On sait qu'un cermet se s'oxyde au moins pour cette plage, tel que cela est décrit par exemple dans le document « SOFC stack performance under high fuel utilization », de Qingping Fang et al., International Journal of Hydrogen Energy, 40 (2015), 1128-1136.

Selon un mode de réalisation, le procédé comprend une étape d'initialisation mise en oeuvre préalablement à l'application de la première valeur de courant et/ou préalablement à l'application de la troisième valeur de courant, et consistant à imposer un courant nul entre l'anode et la cathode, et à alimenter l'anode avec du combustible réducteur.

En appliquant l'étape d'initialisation, on impose donc au préalable une réduction complète de l'oxyde métallique de l'anode.

Par exemple dans le cadre d'un cermet de nickel et de l'hydrogène en tant que combustible, l'étape d'initialisation permet de réduire l'oxyde de nickel selon la relation NiO + H$_2$ → Ni + H$_2$O. Il en résulte qu'il est alors ensuite possible d'imposer des taux d'oxydation par l'application des premier et troisième courants.

Avantageusement, l'étape d'initialisation est mise oeuvre jusqu'à obtenir une tension constante entre l'anode et la cathode. Une tension constante, conforme à l'équation de Nernst qui caractérise le fait que les 2 compartiments sont bien séparés, permet en effet de caractériser une réduction totale du nickel, et donc de s'assurer que les conditions sont remplies pour pouvoir ultérieurement imposer un taux d'oxydation à l'anode.

Selon un mode de réalisation, les variations du courant entre la première et la deuxième valeurs de courant et entre la troisième et la quatrième valeurs de courant sont des créneaux de courant. De telles variations sont simples à mettre en oeuvre et permettent d'obtenir une détection de bonne qualité.

Selon un mode de réalisation, la deuxième et la quatrième valeurs de courant sont nulles. En d'autres termes, de telles valeurs permettent de mettre en oeuvre l'étape d'initialisation. La variation de courant met alors en oeuvre conjointement deux fonctions, la première étant de perturber l'état d'oxydation, et la seconde étant de réduire l'oxyde de l'anode.

Selon un mode de réalisation de l'invention, pour l'application de la première valeur de courant, la charge de courant demande un débit de courant par le dispositif inférieur à 50% de la valeur du courant induisant la consommation complète du combustible alimentant l'anode. De cette manière, on s'assure que le courant débité par le dispositif est inférieure au courant maximal.

Selon un mode de réalisation, la différence entre la première et la troisième valeur de courant est supérieure à 5%. On constate qu'une telle différence implique une différence entre les régimes transitoires qui est quantifiable avec une bonne précision. Notamment, la charge électrique est pilotable et réglée de manière à demander une différence de débit de courant par le dispositif qui soit supérieure à 5% du courant limite.

Selon un mode de réalisation, la première valeur de courant et la troisième valeurs de courant sont appliquées pendant une durée identique.

Notamment, la durée d'application de la première et de la troisième valeurs de courant est supérieure à 1 minute, et notamment égale à 5 minutes. Il a été constaté qu'une telle durée permet d'établir un régime statique pour l'oxydation de l'anode.

Selon un mode de réalisation, l'anode est un cermet à base de nickel.

Selon un mode de réalisation, le dispositif électrochimique est une pile à combustible à oxyde solide.

Selon un mode de réalisation, le combustible est de l'hydrogène et le comburant est du dioxygène ou de l'air.

**BREVE DESCRIPTION DES FIGURES**

L'invention sera mieux comprise à la lecture de la description qui va suivre, donnée uniquement à titre d'exemple, et réalisée en relation avec les dessins annexés, dans lesquels des références identiques désignent des éléments identiques ou analogues, et dans lesquels :

- la figure 1 est une vue schématique en coupe d'une cellule à oxyde solide de l'état de la technique, déjà décrit ci-dessus ;
- la figure 2 est une vue schématique en coupe d'un électrolyseur à oxyde solide de l'état de la technique, déjà décrit ci-dessus ;
- la figure 3 est une vue schématique d'un dispositif électrochimique, par exemple une cellule ou un électrolyseur, à oxyde solide de l'état de la technique associé à un système pour la mise en oeuvre du procédé conforme à l'invention ;
- la figure 4 est un organigramme d'un procédé selon l'invention mise en oeuvre par le système de la figure 3 ;
- la figure 5 est un tracé illustrant deux profils de courant imposés au dispositif de la figure 3 pour l'obtention de deux régimes transitoires de tension ;
- la figure 6 est un tracé des réponses respectives de la tension entre l'anode et la cathode du dispositif aux profils de courant ;
- les figures 7 et 8 sont des tracés illustrant l'influence de la température de la membrane anionique sur lesdites réponses ; et
- la figure 9 est une vue schématique en coupe d'un empilement de cellules à oxyde solide associé à un système pour la mise en oeuvre d'un procédé selon l'invention.

**DESCRIPTION DETAILLEE DE L'INVENTION**

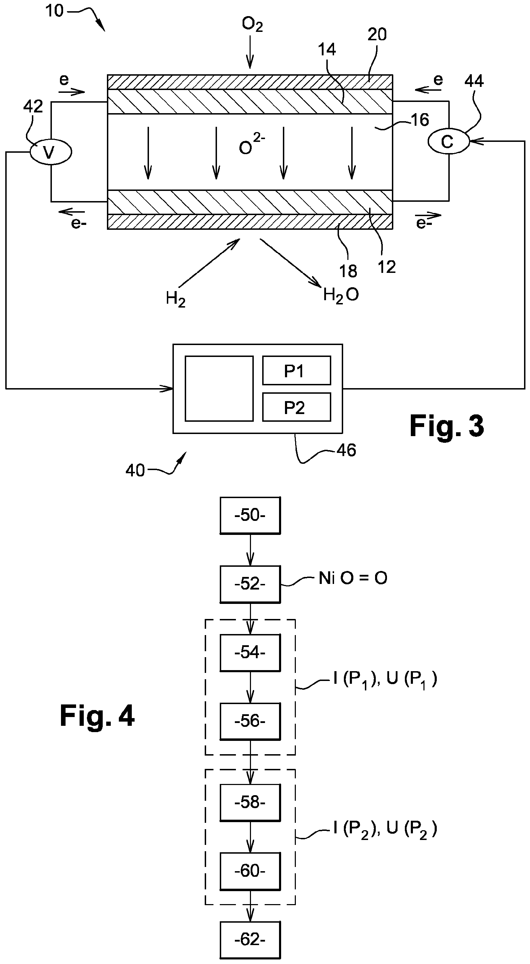

Sur la figure 3, une cellule à oxyde solide **10,** telle que décrite par exemple en relation avec la figure 1 et comprenant une anode **12** constitué d'un cermet à base de nickel, est associée à un système **40** pour la mise en oeuvre d'un procédé de détection d'un phénomène d'oxydation du nickel de l'anode **12.**

Le système **40** comporte :

- un voltmètre **42** pour mesurer la tension $U$ entre l'anode **12** et la cathode **14,**
- une charge électrique pilotable **44** pour faire débiter par la cellule **10** un courant $I$ entre l'anode **12** et la cathode **14,** les électrons circulant de l'anode **12** vers la cathode **14,** et
- une unité **46** de commande et de traitement d'informations connectée au voltmètre **42** pour recevoir la mesure de la tension $U$, et à la charge **44** pour piloter celle-ci selon deux profils de courant $P1$ et $P2,$ d'une manière décrite ci-après.

Un procédé de détection de phénomène d'oxydation de l'anode **12** selon l'invention, mis en oeuvre à l'aide du système **40,** est à présent décrit en relation avec l'organigramme de la figure 4.

Le procédé débute, en **50,** par l'installation du système **40,** consistant par exemple à brancher le voltmètre **42** et charge électrique pilotable **44** sur l'anode **12** et la cathode **14,** et par l'alimentation de l'anode **12** avec de l'hydrogène et l'alimentation de la cathode **14** avec de l'oxygène ou de l'air, les débits d'hydrogène et d'oxygène étant avantageusement conservés constants tout au long du procédé.

Le système **40** est ensuite allumé et la valeur du débit d'hydrogène $Q_{H_2}$ est communiquée à l'unité **46** pour mémorisation, par exemple au moyen d'une interface de l'unité **46** prévue à cet effet.

L'unité **46** calcule en retour la valeur du courant limite $i_{limite}$ selon la relation $i_{limite} = \dfrac{Q_{H_2}}{2F}$, ainsi que les profils de courant $P1$ et $P2$ en fonction de la valeur de débit $Q_{H_2}$. Notamment, l'unité **46** calcule deux valeurs de courant différentes $i_1$ et $i_2$ inférieures à la valeur du courant limite $i_{limite}$.

Avantageusement, les valeurs courant $i_1$ et $i_2$ diffèrent l'une de l'autre d'au moins 5%, et de préférence d'au moins 10%, de la valeur du courant limite $i_{limite}$, de manière à faciliter la comparaison de régimes transitoires ultérieurement générés tel que décrit ci-après. Notamment, la valeur du courant $i_1$ est choisie inférieure à 50% du courant limite $i_{limite}$, et la valeur du courant $i_2$ est choisie supérieure à 95% de la valeur $i_{limite}$, par exemple choisie égale à 98% de la valeur $i_{limite}$.

Le procédé se poursuit, en **52,** par une étape d'initialisation visant à réduire le nickel oxydé de l'anode **12.** A cet effet, l'étape **52** consiste à créer un excès d'hydrogène sur l'anode **12,** de manière à mettre en oeuvre la réaction $NiO + H2 \rightarrow Ni + H_2O$.

Plus particulièrement, conjointement à l'alimentation de l'anode **12** avec de l'hydrogène, un courant électrique nul est imposé entre l'anode **12** et la cathode **14** pendant une durée prédéterminée supérieure à 45 minutes, et de préférence supérieure ou égale à 1 heure.

En variante, l'unité **44** teste la mesure de tension $U$ délivrée par le voltmètre **42** pour déterminer quand cette dernière devient constante, ce qui marque alors la fin de l'étape d'initialisation **52**. Il a en effet été observé qu'une fois l'oxyde de nickel réduit, la tension $U$ entre l'anode et la cathode est constante.

Dans une étape **54** suivante, la valeur $U_{OCV}$ de la tension constante à courant nul, également connue sous le nom d'« OCV » (pour « *Open Circuit Voltage* »), est mémorisée par l'unité **46**. L'unité **46** commande alors la charge pilotable **44** pour que cette dernière demande un débit de courant par la cellule selon le profil de courant *P1* entre l'anode **12** et la cathode **14**. Notamment, la charge **44** fait débiter par la cellule **10** un courant *I* de valeur $i_1$ pendant une durée prédéterminée $\Delta T$.

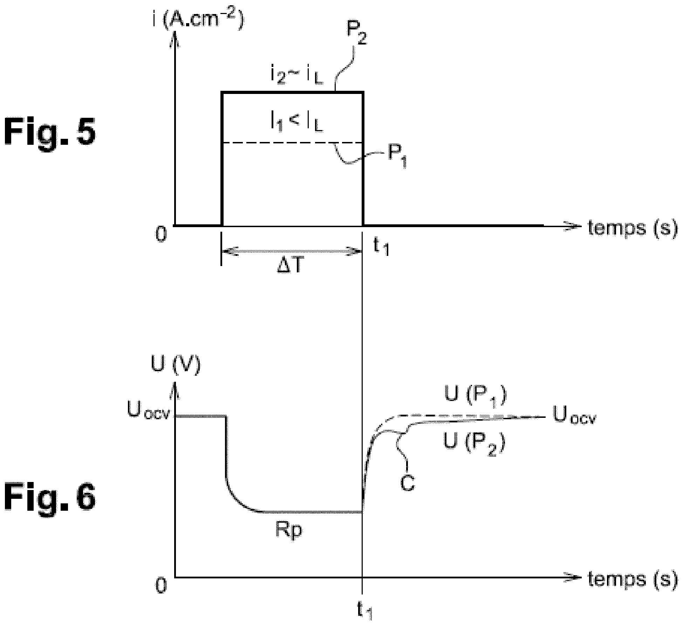

Un créneau de courant entre 0 et $i_1$ est donc appliqué entre l'anode **12** et la cathode **14,** tel qu'illustré à la figure 5. La durée $\Delta T$ est choisie pour que la tension $U$ entre l'anode **12** et la cathode **14** atteigne un régime permanent $R_P$ telle que représenté à la figure 6 qui illustre la réponse de la tension $U$ au courant *I* débité par la cellule **10.**

Selon une première variante, la durée $\Delta T$ est choisie a priori et mémorisée dans l'unité **46,** et est supérieure à 1 minute, et de préférence supérieure à 5 minutes, et l'unité **46** commande l'arrêt du débit par la cellule **10** du courant $i_1$ une fois la durée $\Delta T$ écoulée.

Dans une seconde variante, l'unité **46** teste si la mesure de la tension $U$ est constante, et stoppe le débit de courant une fois la tension $U$ devenue constante.

Si le dispositif **10** présente des défauts susceptibles de provoquer l'oxydation du cermet de nickel, le débit de courant signifie que le flux d'ions $O^{2-}$ implique l'oxydation de l'hydrogène $H_2$ et l'oxydation du nickel de l'anode **12**. Aussi, si le dispositif **10** est défectueux, l'anode **12** s'oxyde. De préférence, la valeur du courant $i_1$ étant très inférieure à la valeur du courant limite $i_{limite}$, le courant débité par la cellule **10** est inférieure au courant maximum, de sorte que l'oxydation de l'anode est faible, voire nulle.

Parallèlement, l'unité **46** mémorise, en **56,** la réponse $U(P_1)$ (en traits pointillés) de la tension $U$ depuis l'instant $t_1$ d'arrêt du débit par la cellule **10** du courant $i_1$. Comme illustré à la figure 6, l'arrêt du courant $i_1$ provoque un régime transitoire qui finit par rejoindre un régime permanent, à savoir la tension $U_{OCV}$. L'unité **44** stoppe l'enregistrement lorsque la tension $U$ est stabilisé sur la tension $U_{OCV}$, par exemple lorsque la tension $U$ vaut 99% de cette valeur.

On notera que le retour à la tension $U_{OCV}$ produit un résultat analogue à l'étape d'initialisation **52**. En effet, un courant nul étant imposé à partir de l'instant $t_1$, l'hydrogène est donc en excès sur l'anode **12,** ce qui produit une réduction de l'oxyde de nickel.

Dans une étape **58** suivante, l'unité **46** commande la charge électronique **44** pour que cette dernière impose le profil de courant *P2* entre l'anode **12** et la cathode **14,** à savoir la charge pilotable **44** demande un débit par la cellule **10** d'un courant *I* de valeur $i_2$ d'une manière analogue à l'étape **54,** puis dans une étape **60** l'unité **46** enregistre la réponse $U(P_2)$ (en trait continu)

de la tension $U$ depuis l'instant $t_1$ d'arrêt du débit par la cellule **10** du courant $i_2$, d'une manière analogue à l'étape **56.**

La valeur du courant $i_2$ étant proche de la valeur du courant limite $i_{limite}$, le courant effectivement débité par la cellule **10** est par conséquent proche ou égal au courant maximal. L'essentiel de l'hydrogène est donc consommé sur l'anode, ce qui laisse place aux phénomènes d'oxydation si ceux-ci doivent avoir lieu. On remarque ainsi que la réponse $U(P_2)$, qui correspond à la réponse d'une anode partiellement oxydée, présente un régime transitoire très différent du régime issu de l'application du profil de courant *P2* pour lequel le taux d'oxydation de l'anode est moindre. En effet, lorsque le courant retrouve à nouveau une valeur nulle, une partie de l'hydrogène est consommé pour réduire l'oxyde de l'anode selon la réaction $NiO + H_2 \rightarrow Ni + H_2O$, ce qui retarde d'autant le retour à l'équilibre sur la valeur de tension $U_{OCV}$. Ce retard s'observe notamment par le creux *C* sur le régime transitoire $U(P_2)$.

On remarque également que le taux d'oxydation n'influe pas sur la valeur des régimes permanents. L'invention se fonde donc sur une découverte particulière du fonctionnement d'un dispositif électrochimique à oxyde solide, à savoir que les effets de l'oxydation de l'anode se font essentiellement sentir en régime transitoire et très peu, voire pas du tout, en régime permanent.

Le procédé se poursuit alors, en **62,** par la comparaison des régimes transitoires $U(P_1)$ et $U(P_2)$. Si ceux-ci diffèrent, alors un phénomène d'oxydation de l'anode est détecté. Par exemple, l'unité **46** calcule la durée d'établissement de ces régimes transitoires sur le régime permanent $U_{OCV}$, définie par exemple par la durée mise par les tensions $U(P_1)$ et $U(P_2)$ pour atteindre 90% de la valeur $U_{OCV}$, et si ces durées calculées différent de plus d'une valeur seuil, par exemple 10%, alors le phénomène d'oxydation est détecté. D'autres critères peuvent bien entendu être utilisés. Par exemple, l'unité **46** calcule l'aire séparant les deux régimes transitoires, et si l'aire est supérieure à une valeur prédéterminée, alors la détection est positive. Par exemple, l'unité **46** fonctionne en numérique, les tensions $U(P_1)$ et $U(P_2)$ étant échantillonnées dans le temps selon une période d'échantillonnage prédéterminée *Te,* et l'aire est calculée selon la relation $\sum_n |U(P_1)(nTe) - U(P_2)(nTe)|$.

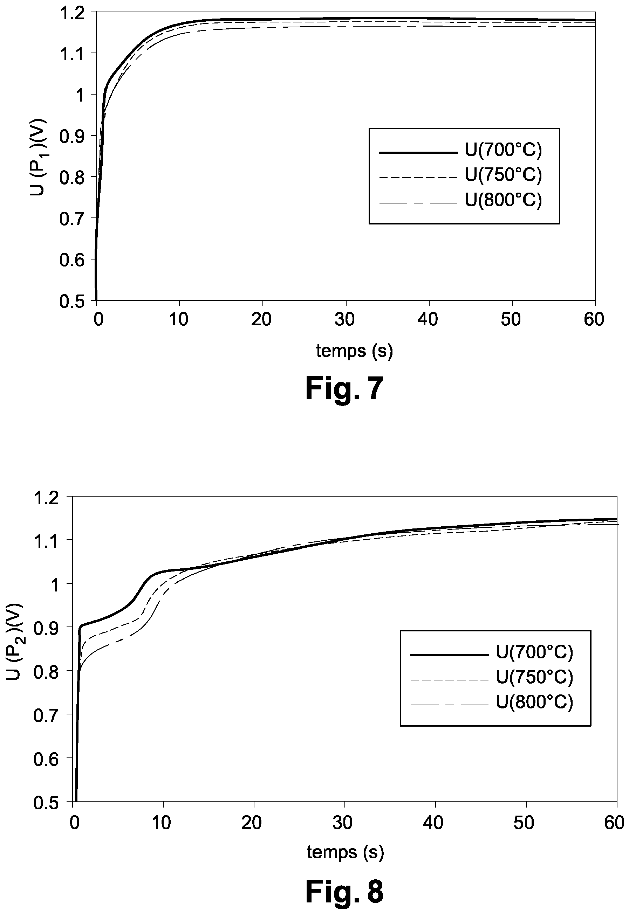

Il est ainsi obtenu un procédé efficace de diagnostic de l'état de fonctionnement du dispositif **10**. En outre, il est observé que le procédé selon l'invention est efficace pour de nombreuses conditions opératoires. Par exemple, il a été observé que la température appliquée à la membrane **16** pour l'activation de sa conduction anionique ne modifie sensiblement pas le profil des tensions $U(P_1)$ et $U(P_2)$ et décale ces tensions dans le même sens, comme illustré aux figures 7 et 8.

Il a été décrit un mode de réalisation particulier de l'invention. De nombreuses variantes sont possibles.

Par exemple, les profils *P1* et *P2* ne sont pas des créneaux de courant, mais peuvent au contraire prendre toute forme à partir du moment où il implique une variation de courant induisant la réduction de l'oxyde de l'anode, par exemple un profil en triangle, en trapèze ou autres. De même, la variation de courant peut consister à imposer une valeur de courant qui n'est pas nulle. Dans un tel cas, une étape d'initialisation analogue à l'étape **52** est mise en oeuvre entre l'application des deux profils de courant et/ou le profil appliqué en dernier est celui impliquant une oxydation la plus élevée de l'anode.

De même, il a été décrit l'acquisition de deux régimes transitoires. En variante, le régime transitoire provoqué par le profil de courant ayant les valeurs les plus faibles peut être acquis au préalable, par exemple en usine. Ce régime est alors mémorisé dans l'unité **46** ou bien la caractéristique de ce régime, utilisé pour la comparaison, par exemple sa durée d'établissement, est calculée et mémorisée dans l'unité **46.**

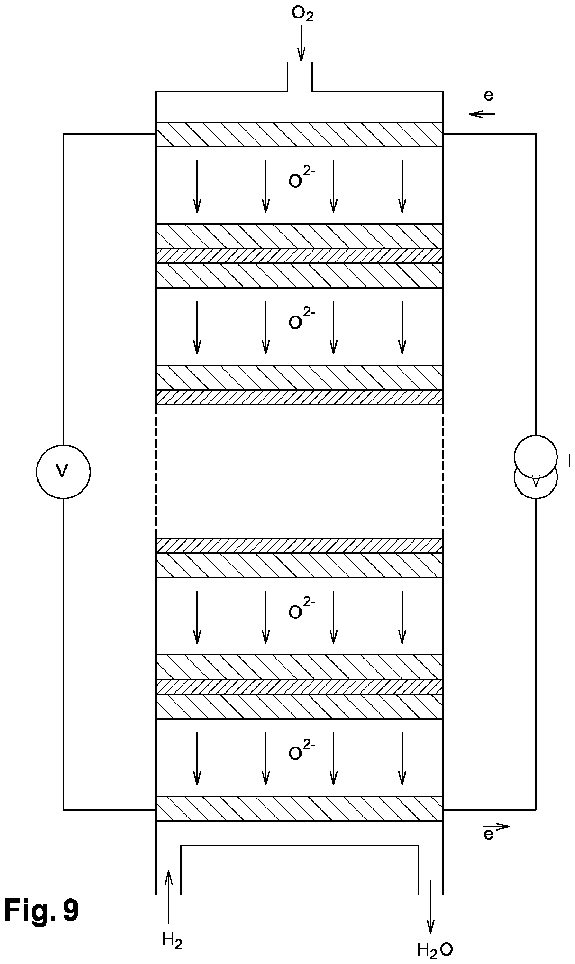

Il a été décrit une application de l'invention à une cellule à oxyde métallique fonctionnant en pile ou en électrolyseur. L'invention s'applique évidemment à un empilement de ce type de cellule, tel qu'illustré par exemple à la figure 9 dans laquelle le courant appliqué et la tension mesurée concernent les électrodes les plus extrêmes de l'empilement.

En variante ou de manière supplémentaire, pour un tel empilement, si une mesure de tension est possible sur chacune des cellules, le procédé décrit précédemment est mis en oeuvre, ce qui permet de déterminer quelle cellule est défectueuse.

## Revendications

1. Procédé de détection d'un phénomène d'oxydation d'une anode métallique poreuse (12) d'un dispositif électrochimique (10), ledit dispositif comprenant une cathode poreuse (14), et un électrolyte (16) intercalé entre l'anode (12) et la cathode (16), ledit procédé comprenant l'application d'un mode de fonctionnement prédéterminé au dispositif électrochimique (10) consistant à alimenter l'anode (12) avec un combustible réducteur, à alimenter la cathode (14) avec un comburant oxydant, et à activer un mode de conduction anionique de l'électrolyte (16),

le procédé consistant en outre, lors de l'application du mode de fonctionnement du dispositif électrochimique :

- à appliquer (en 54) une première valeur de courant entre l'anode (12) et la cathode (14) de manière à obtenir une tension constante entre l'anode et la cathode ;
- puis à faire varier (en 54) le courant appliqué entre l'anode (12) et la cathode (14) entre la première valeur de courant et une deuxième valeur de courant de manière à induire un premier régime transitoire de la tension entre l'anode (12) et la cathode (14) ;

- à appliquer (en 58) une troisième valeur de courant entre l'anode (12) et la cathode (14) de manière à obtenir une tension constante entre l'anode et la cathode, la troisième valeur de courant étant différente de la première valeur de courant ; la troisième valeur de courant étant proche de la valeur d'un courant limite induisant la consommation complète du combustible alimentant l'anode d'un dispositif idéal ; les première et troisième valeurs de courant présentant une différence d'au moins 5% ;
- puis à faire varier (en 58) le courant appliqué entre l'anode et la cathode entre la troisième valeur de courant et une quatrième valeur de courant de manière à induire un second régime transitoire de la tension entre l'anode et la cathode ;
- à comparer (en 60) les premier et second régimes transitoires et à détecter l'occurrence d'un phénomène d'oxydation de l'anode (12) si les premier et second régimes transitoires diffèrent l'un de l'autre de plus d'une valeur prédéterminée.

2. Procédé de détection d'un phénomène d'oxydation d'une anode métallique poreuse selon la revendication 1, dans lequel :

- l'application des première et troisième valeurs de courant consiste à connecter une charge électrique (44) entre l'anode (12) et la cathode (14) ; et
- pour l'application de la troisième valeur de courant, ladite charge électrique (44) demandant un débit de courant par le dispositif compris entre 95% et 100% de la valeur du courant limite induisant la consommation complète du combustible alimentant l'anode d'un dispositif idéal.

3. Procédé de détection d'un phénomène d'oxydation d'une anode métallique poreuse selon la revendication 1 ou 2, comprenant une étape d'initialisation mise en oeuvre préalablement à l'application de la première valeur de courant et/ou préalablement à l'application de la troisième valeur de courant, et consistant :

- à imposer un courant nul entre l'anode et la cathode ; et
- à alimenter l'anode avec du combustible réducteur.

4. Procédé de détection d'un phénomène d'oxydation d'une anode métallique poreuse selon la revendication 3, dans lequel l'étape d'initialisation est mise oeuvre jusqu'à obtenir une tension constante entre l'anode et la cathode.

**5.** Procédé de détection d'un phénomène d'oxydation d'une anode métallique poreuse selon la revendication 1, 2, 3 ou 4, dans lequel les variations du courant entre la première et la deuxième valeurs de courant et entre la troisième et la quatrième valeurs de courant sont des créneaux de courant.

**6.** Procédé de détection d'un phénomène d'oxydation d'une anode métallique poreuse selon la revendication 1, 2, 3 ou 4, dans lequel la deuxième et la quatrième valeurs de courant sont nulles.

**7.** Procédé de détection d'un phénomène d'oxydation d'une anode métallique poreuse selon l'une quelconque des revendications précédentes, dans lequel la première valeur de courant et la troisième valeur de courant sont appliquées pendant une durée identique.

**8.** Procédé de détection d'un phénomène d'oxydation d'une anode métallique poreuse selon la revendication 7, dans lequel la durée d'application de la première et de la troisième valeurs de courant est supérieure à 1 minute, et notamment égale à 5 minutes.

**9.** Procédé de détection d'un phénomène d'oxydation d'une anode métallique poreuse selon l'une quelconque des revendications précédentes, dans lequel l'anode est un cermet à base de nickel.

**10.** Procédé de détection d'un phénomène d'oxydation d'une anode métallique poreuse selon l'une quelconque des revendications précédentes, dans lequel le dispositif électrochimique est une pile à combustible à oxyde solide.

**11.** Procédé de détection d'un phénomène d'oxydation d'une anode métallique poreuse selon l'une quelconque des revendications précédentes, dans lequel le combustible est de l'hydrogène et le comburant est du dioxygène ou de l'air.

**Patentansprüche**

**1.** Verfahren zur Detektion von Oxidationsphänomenen einer porösen Metallanode (12) in einer elektrochemischen Vorrichtung (10), wobei diese Vorrichtung eine poröse Kathode (14) und einen Elektrolyt (16), der zwischen der Anode (12) und der Kathode (16) angeordnet ist, umfasst, wobei dieses Verfahren die Anwendung einer vorher festgelegten Funktionsweise auf die elektrochemische Vorrichtung (10) umfasst, die darin besteht, der Anode (12) einen reduzierenden Brennstoff und der Kathode (14) ein oxidierendes Verbrennungsgas zuzuführen und einen anionischen Konduktionsmodus des Elektrolyts (16) zu aktivieren, wobei das Verfahren außerdem darin besteht, bei Anwendung des Betriebsmodus der elektrochemischen Vorrichtung:

○ (in 54) einen ersten Stromwert zwischen der Anode (12) und der Kathode (14) anzuwenden, um so eine konstante Spannung zwischen der Anode und der Kathode zu erhalten;
○ dann (in 54) den zwischen der Anode (12) und der Kathode (14) angelegten Strom zwischen dem ersten Stromwert und einem zweiten Stromwert zu variieren, so dass ein transienter Zustand der Spannung zwischen der Anode (12) und der Kathode (14) induziert wird;
○ (in 58) einen dritten Stromwert zwischen der Anode (12) und der Kathode (14) anzuwenden, um eine konstante Spannung zwischen der Anode und der Kathode zu erhalten, wobei der dritte Stromwert sich von dem ersten Stromwert unterscheidet; der dritte Stromwert nahe eines Grenzstroms ist, der den vollständigen Verbrauch des der Anode einer idealen Vorrichtung zugeführten Brennstoffs induziert, der erste und der dritte Stromwert eine Differenz von mindestens 5% aufweisen;
○ dann (in 58) den zwischen der Anode und der Kathode angelegten Strom zwischen dem dritten Stromwert und einem vierten Stromwert zu variieren, um so einen zweiten transienten Zustand der Spannung zwischen der Anode und der Kathode zu induzieren;
○ (in 60) den ersten und den zweiten transienten Zustand zu vergleichen und das Auftreten des Phänomens einer Oxidation der Anode (12) zu detektieren, wenn der erste und der zweite transiente Zustand sich um mehr als einen vorher festgelegten Wert unterscheiden.

**2.** Verfahren zur Detektion eines Oxidationsphänomens einer porösen Metallanode nach Anspruch 1, bei dem:

○ das Anwenden des ersten und dritten Stromwertes darin besteht, eine elektrische Ladung (44) zwischen der Anode (12) und der Kathode (14) zu verbinden; und
○ zum Anwenden des dritten Stromwertes diese elektrische Ladung (44) durch die Vorrichtung einen Stromfluss zwischen 95% und 100% des Grenzstromwertes erfordert, der den vollständigen Verbrauch des Brennstoffs induziert, der die Anode einer idealen Vorrichtung versorgt.

**3.** Verfahren zur Detektion eines Oxidationsphänomens einer porösen Metallanode nach Anspruch 1 oder 2, das eine Stufe der Initialisierung umfasst, die vor dem Anlegen des ersten Stromwertes und/oder vor dem Anlegen des dritten Stromwertes stattfindet, und die darin besteht:

○ einen Nullstrom zwischen der Anode und der Kathode zu erzwingen; und

○ die Anode mit dem reduzierenden Brennstoff zu versorgen.

4. Verfahren zur Detektion eines Oxidationsphänomens einer porösen Metallanode nach Anspruch 3, bei dem die Initialisierung durchgeführt wird, bis eine konstante Spannung zwischen der Anode und der Kathode erhalten wird.

5. Verfahren zur Detektion eines Oxidationsphänomens einer porösen Metallanode nach Anspruch 1, 2, 3 oder 4, bei dem die Änderungen des Stroms zwischen dem ersten und dem zweiten Stromwert und zwischen dem dritten und dem vierten Stromwert Stromspitzen sind.

6. Verfahren zur Detektion eines Oxidationsphänomens einer porösen Metallanode nach Anspruch 1, 2, 3 oder 4, bei dem der zweite und der vierte Stromwert Null sind.

7. Verfahren zur Detektion eines Oxidationsphänomens einer porösen Metallanode nach einem der vorhergehenden Ansprüche, bei der der erste und der dritte Stromwert während einer identischen Zeitdauer angelegt werden.

8. Verfahren zur Detektion eines Oxidationsphänomens einer porösen Metallanode nach Anspruch 7, bei dem die Dauer des Anlegens des ersten und des dritten Stromwertes länger als eine Minute ist und insbesondere gleich 5 Minuten.

9. Verfahren zur Detektion eines Oxidationsphänomens einer porösen Metallanode nach einem der vorangehenden Ansprüche, bei dem die Anode ein Cermet auf Nickelbasis ist.

10. Verfahren zur Detektion eines Oxidationsphänomens einer porösen Metallanode nach einem der vorangehenden Ansprüche, bei dem die elektrochemische Vorrichtung eine Festoxidbrennstoffzelle ist.

11. Verfahren zur Detektion eines Oxidationsphänomens einer porösen Metallanode nach einem der vorangehenden Ansprüche, bei dem der Brennstoff Wasserstoff ist und bei dem der Verbrennungsstoff Sauerstoff oder Luft ist.

**Claims**

1. Method for detection of a phenomenon of oxidation of a porous metal anode (12) of an electrochemical device (10), with the said device incorporating a porous cathode (14) and an electrolyte (16) positioned between the anode (12) and the cathode (16), with the said method incorporating the application of an operating mode previously determined for the electrochemical device (10), consisting in feeding the anode (12) with a reducing fuel, feeding the cathode (14) with an oxidizer, and activating a mode of anionic conduction of the electrolyte (16), with the method also consisting in the following, during the application of the mode of operation of the electrochemical device:

• applying (in 54) a first value of current between the anode (12) and the cathode (14) so as to obtain a constant voltage between the anode and the cathode;
• then varying (in 54) the current applied between the anode (12) and the cathode (14) between the first value of current and a second value of current, so as to induce a first transient state of the voltage between the anode (12) and the cathode (14);
• applying (in 58) a third value of current between the anode (12) and the cathode (14), so as to obtain a constant voltage between the anode and the cathode, with the third value of current being different from the first value of current; with the third value of current being close to the value of a limit current inducing the complete consumption of the fuel feeding the anode of an ideal device; with the first and third values of current presenting a difference of at least 5%;
• then varying (in 58) the current applied between the anode and the cathode between the third value of current and a fourth value of current, so as to induce a second transient state of the voltage between the anode and the cathode;
• comparing (in 60) the first and second transient states and detecting the occurrence of a phenomenon of oxidation of the anode (12) if the first and second transient states differ from each other by more than a previously-determined value.

2. Method for detection of a phenomenon of oxidation of a porous metal anode according to claim 1, in which:

• the application of the first and third values of current consists in connecting an electrical charge (44) between the anode (12) and the cathode (14); and
• for the application of the third value of current, the said electrical charge (44) requiring a flow of current by the device between 95% and 100% of the value of the limit current inducing the complete consumption of the fuel feeding the anode of an ideal device.

3. Method for the detection of a phenomenon of oxidation of a porous metal anode according to claim 1 or claim 2, incorporating a stage of initialization implemented prior to the application of the first value of current and/or prior to the application of the third value of current, and consisting in:

   • imposing a null current between the anode and the cathode; and
   • feeding the anode with the reducing fuel.

4. Method of detection of a phenomenon of oxidation of a porous metal anode according to claim 3, in which the stage of initialization is implemented until the obtention of a constant voltage between the anode and the cathode.

5. Method of detection of a phenomenon of oxidation of a porous metal anode according to claims 1, 2, 3 or 4, in which the variations of the current between the first and second values of current and between the third and fourth values of current are current windows.

6. Method of detection of a phenomenon of oxidation of a porous metal anode according to claims 1, 2, 3 or 4, in which the second and fourth values of current are null.

7. Method of detection of a phenomenon of oxidation of a porous metal anode according to any of the preceding claims, in which the first value of current and the third value of current are applied for an identical period of time.

8. Method of detection of a phenomenon of oxidation of a porous metal anode according to claim 7, in which the duration of application of the first and third values of current is greater than 1 minute and, notably, equal to 5 minutes.

9. Method of detection of a phenomenon of oxidation of a porous metal anode according to any of the preceding claims, in which the anode is a nickel-based cermet.

10. Method of detection of a phenomenon of oxidation of a porous metal anode according to any of the preceding claims, in which the electrochemical device is a solid-oxide-fuel battery.

11. Method of detection of a phenomenon of oxidation of a porous metal anode according to any of the preceding claims, in which the fuel is hydrogen and the oxidizer is dioxygen and air.

EP 3 114 723 B1

$$1/2O_2 + 2e- \rightarrow O^{2-}$$

$$O_2$$

10

e

22

C

e-

$$O^{2-}$$

20
14
16
12
18

**Fig. 1**

(Etat de la technique)

$$H_2$$

$$H_2O$$

$$H_2 + O^{2-} \rightarrow H_2O + 2e-$$

$$O^{2-} \rightarrow 1/2O_2 + 2e-$$

$$O_2$$

30

e-

e

$$O^{2-}$$

18
12
16
14
20

**Fig. 2**

(Etat de la technique)

$$H_2O$$

$$H_2$$

$$H_2O + 2e- \rightarrow H_2 + O^{2-}$$

11

**Fig. 3**

**Fig. 4**

**Fig. 5**

i (A.cm$^{-2}$)

P$_2$

i$_2$~ i$_L$

I$_1$< I$_L$

P$_1$

0     ΔT     t$_1$     temps (s)

**Fig. 6**

U (V)

U$_{ocv}$

U (P$_1$)

U$_{ocv}$

U (P$_2$)

C

Rp

0     t$_1$     temps (s)

**Fig. 7**

**Fig. 8**

O$_2$

e

O$^{2-}$

O$^{2-}$

V

I

O$^{2-}$

O$^{2-}$

e

**Fig. 9**

H$_2$

H$_2$O

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006222929 A

- FR 2983493

**Littérature non-brevet citée dans la description**

- **QINGPING FANG et al.** SOFC stack performance under high fuel utilization. *International Journal of Hydrogen Energy,* 2015, vol. 40, 1128-1136